# EUROPÄISCHE PATENTANMELDUNG

(11) **EP 3 935 946 A1**
(43) Veröffentlichungstag der Anmeldung: **12.01.2022**
(21) Anmeldenummer: 20184124.4
(22) Anmeldetag: 06.07.2020
(51) Int. Cl.: A01N 59/16, A01N 59/00, A01P 1/00, C02F 1/00, C02F 1/28, C02F 1/72, B01D 24/00, B01D 39/00

(54) **VORRICHTUNG ZUR ABREICHERUNG VON AKTIVEN MIKROORGANISMEN IN FLUIDEN**

(71) Anmelder: AgXX, 14169 Berlin (DE)
(72) Erfinder: Landau, Uwe, 14169 Berlin (DE); Meyer, Carsten, 10589 Berlin (DE); Wagner, Olaf, 12163 Berlin (DE); Haag, Rainer, 12209 Berlin (DE); Ahmed, Rameez, 10783 Berlin (DE)
(74) Vertreter: Remus, Alvaro Johannes

(57) **Zusammenfassung**

Die Erfindung betrifft eine Vorrichtung 1 zur Reduzierung der Anzahl aktiver Mikroorganismen 2 in Fluiden, welche mindestens einen Strömungsbereich 3 umfasst, der von dem Fluid durchströmbar ist, wobei der Strömungsbereich 3 mindestens eine antimikrobielle Komponente 5 zur Inaktivierung der Mikroorganismen 2 und mindestens eine Adsorptionskomponente 4 zur reversiblen und temporären Bindung der Mikroorganismen 2 umfasst. Die Erfindung betrifft ferner ein Verfahren, bei dem das Fluid mindestens einen Strömungsbereich 3 durchströmt und dabei an mindestens einer antimikrobiellen Komponente 5 und mindestens einer Adsorptionskomponente 4 vorbeiströmt, wobei die Strömungsgeschwindigkeit der Mikroorganismen 2 im Strömungsbereich 3 durch reversible und temporäre Bindung an die Adsorptionskomponente 4 derart verringert wird, dass die Mikroorganismen 2 durch die antimikrobielle Komponente 5 inaktiviert werden.

## Beschreibung

### Hintergrund der Erfindung

Die Erfindung betrifft eine Vorrichtung zur Reduzierung der Anzahl aktiver Mikroorganismen in Fluiden, welche mindestens einen Strömungsbereich umfasst, der von dem Fluid durchströmbar ist. Die Erfindung betrifft ferner ein Verfahren zur Reduzierung der Anzahl aktiver Mikroorganismen in mindestens einem Fluid, wobei das Fluid mindestens einen Strömungsbereich durchströmt.

Die Kontamination von Fluiden, insbesondere Flüssigkeiten und Luft, mit Mikroorganismen stellt für die Weltgemeinschaft zunehmend eine große Herausforderung dar, denn die Übertragung und Verbreitung von Keimen führt Jahr für Jahr zu ernsthaften Erkrankungen und erheblichen wirtschaftlichen Schäden. Da beispielsweise die Vermehrung von Bakterien bei Temperaturen von 35 °C erheblich zunimmt, wird sich diese Problematik vor dem Hintergrund der Klimaerwärmung noch verstärken. Daher spielt eine effektive Entkeimung z.B. von flüssigen Medien im täglichen Leben eine bedeutende Rolle. Dies betrifft beispielsweise die Trinkwasserversorgung. Auch unter der Annahme, dass qualitativ einwandfreies Trinkwasser von den Versorgern in die Wassernetze eingespeist wird, besteht für den Verbraucher ein gesundheitliches Risiko durch retrograde Verkeimung der Leitungen. Ein Beispiel ist der Ausbruch von Legionellen in einem Hotel in Philadelphia im Jahr 1976 mit 34 Todesopfern. Eine besondere Gefahrenlage besteht hierbei für Einrichtungen, in den Menschen mit geschwächtem Immunsystem untergebracht sind, wie z.B. Krankenhäuser oder Altenheime. Allein in Deutschland schätzt das Robert-Koch-Institut die Anzahl nosokomialer Infektionen auf 400.000 - 600.000 Fälle pro Jahr. Durch den starken Anstieg multiresistenter Keime z.B. für Stämme von *Escherichia Coli, Klebsiella pneumoniae* oder *Staphylococcus aureus* nimmt die Anzahl schwerer Infektionen ebenfalls dramatisch zu. Das Gefahrenpotential, das bei der Übertragung von Keimen von der Trinkwasserversorgung ausgeht, steigt in wärmeren Regionen meist stark an. Besonders kritisch sind Gebiete mit geringen Anforderungen bzw. Kontrollen der Trinkwasserqualität oder Krisengebiete.

Durch die schlechte Versorgungslage breiten sich dort Krankheiten wie Cholera rasant aus und fordern viele Todesopfer. Beispiele aus der jüngeren Vergangenheit sind die Epidemien in Haiti oder Jemen. Die Kontamination mit Mikroorganismen birgt auch für industrielle Bereiche weitreichende Risiken. Mit Keimen belastete Produkte z.B. in der Lebensmittel-, Kosmetik-, Farb- oder Pharmaindustrie müssen entsorgt werden. Zusätzlich werden Schäden durch Biofilmbildung oder Biokorrosion (MIC) verursacht, die den Ausfall von technischen Anlagen wie Kühlkreisläufen oder Transportleitungen bewirken können. Der durch Biokorrosion verursachte jährliche Schaden wird allein für Deutschland auf mehrere Milliarden Euro beziffert.

### Stand der Technik

Eine Strategie zur Vermeidung von Mikroorganismen in flüssigen Medien besteht in dem verstärkten Einsatz von Bioziden. Dieser Ansatz erweist sich jedoch häufig als problematisch, da die zunehmende Bildung von Resistenzen eine höhere Dosierung der Biozide erfordert oder diese gänzlich wirkungslos macht. Weiterhin geht von Bioziden eine Gesundheitsgefahr für Mensch und Tier aus, so dass deren Einsatz streng reguliert ist. Eine weitere Strategie besteht in der mechanischen Entfernung der Keime aus Fluiden über entsprechende Filterelemente. Hierbei spielen Membranfilter eine wesentliche Rolle, wobei Mikroorganismen an den Poren der Membran zurückgehalten werden. Aufgrund des Strömungswiderstandes der Membran ist ein erheblicher technischer Aufwand erforderlich, wobei über ein elektrisch betriebenes Pumpensystem das flüssige Medium mit hohem Druck durch das Filterelement gepresst werden muss. Aufgrund der zurückgehaltenen Mikroorganismen steigt der Strömungswiderstand der Membran mit zunehmender Betriebsdauer an, so dass in der Folge eine erhöhte Pumpleistung erforderlich ist. Dieser Prozess wird durch Biofilmbildung verstärkt. Zudem kann der Biofilm die Filtermembran durchdringen, so dass das Filterelement letztlich zur Quelle von Mikroorganismen wird. Der Einsatz von Filtermembranen ist somit stets mit einer gewissen Prozessunsicherheit verbunden.

Filtersysteme zur Entfernung von Mikroorganismen aus Fluiden basieren auf einem Material, das die Mikroorganismen mechanisch im Filter zurückhält, wobei die verwendeten Materialien häufig mit einer bioziden Substanz ausgestattet sind. Der Filter kann als Kapillare oder als Membran ausgeführt sein, die aus organischen Materialien (z.B. Kunststoff) oder anorganischen Materialien (z.B. Keramik) bestehen. Bei der Ultrafiltration beträgt die Porengröße etwa 0,1 - 0,3 µm für die Rückhaltung von Bakterien und 0,01 - 0,04 µm für die Rückhaltung von Viren. Als biozide Substanzen werden Metalle wie Silber, Kupfer oder Zink, deren Salze, Halogene bzw. Halogenide sowie organische Verbindungen wie Triclosan oder quartäre Ammoniumverbindungen eingesetzt. Über ein Depot werden die Biozide sukzessive an das zu filtrierende Medium abgegeben, bis das Depot erschöpft ist. In allen Varianten werden die Mikroorganismen aus dem flüssigen Medium entfernt und verbleiben in den Filtermaterialien, so dass der Strömungswiderstand des Filters mit zunehmender Verwendungsdauer ansteigt. Im ungünstigsten Fall wird der Filter dadurch vollständig blockiert. Durch Biofilmbildung wird dieses Problem zusätzlich verstärkt.

DE 698 257 49 T2 beschreibt eine Filterkassette, die aus einem Kernbauglied besteht, das von mehreren mikroporösen Membranen umgeben ist. Das Kernbauglied besteht aus Aktivkohle, Kunststoff, Papier, Metall und Keramik. Die Membranen bestehen aus einem Polymer der Gruppe Polyester, Polysulfon, Polyethylen und Polypropylen. Das Kernbauglied oder die Membranen sind mit einem antimikrobiell imprägnierten Garn umwickelt. Als antimikrobieller Wirkstoff dient z.B. 5-Chlor-2-(2,4-dichlorphenoxy)phenol.

DE 103 353 43 A1 beschreibt ein keramisches Filterelement, das über einen Sinterprozess hergestellt wird, bei dem Oxide, Sulfide, Carbide und Nitride verwendet werden. Zusätzlich ist das Filterelement mit einer bioziden Substanz beschichtet.

WO 2008/110166 A1 beschreibt ein Filterelement aus mikroporösen Filtermembranen, deren Porengröße für Filtration von Bakterien oder Viren geeignet ist. Der mikroporöse Filter besteht aus gestapelten Platten aus einem hydrophilen Polymer oder Keramik oder aus Polymerfasern. Als biozide Substanzen werden Halogene, halogenierte Harze oder Silber eingesetzt. Die Biozide werden über ein Reservoir zugeführt oder sind in die Filtermaterialien integriert.

US 2001/0009239 A1 beschreibt einen Sandbettfilter für die Wasserfiltration, dessen Partikel mit quartären Ammoniumverbindungen sowie mit Silber oder Kupfer ausgestattet sind. Die Partikel werden zunächst mit Silbernitrat oder Kupfernitrat bei 800 - 900 °C kalziniert. Dann erfolgt die weitere Funktionalisierung von SiO₂ mit einer Lösung von 3-(Trimethoxysilyl)-propyldimethyloctadecylammoniumchlorid.

US 2008/0302713 A1 beschreibt einen Filter, der aus einer porösen Membran aus Keramik, Aktivkohle, Metall, Cellulose oder Kunststoff besteht. Die Porengröße beträgt 0,05 - 5,0 µm. Der innere Filterkern ist mit gewickeltem Garn oder Vlies umhüllt, das jeweils mit einer bioziden Ausstattung aus Silber, Kupfer, Zink, deren Verbindungen oder organischen Substanzen versehen ist.

US 6 471 876 B1 beschreibt Filterpartikel aus Keramik, Kunststoff oder Glas, die durch Copolymerisation von einem anionischen Polymer und einer keimabtötenden kationischen Substanz beschichtet sind. Die keimabtötende kationische Substanz gehört zur Gruppe der Biguanide, der quartären Ammoniumverbindungen, zu Dijodmethyl-p-tolylsulfon oder zu Zinkpyrithion. Das anionische Polymer setzt sich aus Vinyl- oder Acryl-Einheiten zusammen, die vorzugsweise eine Carboxyl- oder Sulfonylgruppe enthalten.

CA 2 851 889 A1 beschreibt ein Verfahren zur Herstellung antimikrobiell aktiver Filter. Die Filter bestehen aus elektrogesponnenen Polymerfasern oder Spinnvlies, die mit Silber oder einer anderen bioziden Substanz beschichtet sind. Die Silberschicht wird durch chemische Gasphasenabscheidung, physikalische Gasphasenabscheidung, Sol-Gel Abscheidung oder durch eine Kombination der Verfahren abgeschieden.

US 2010/0051527 A1 beschreibt ein mikroporöses Filterelement für Flüssigkeiten mit einer geeigneten Porengröße, um Bakterien oder Viren zurückzuhalten. Eine biozide Substanz wird als Gas, Flüssigkeit oder Feststoff zugeführt.

### Beschreibung der Erfindung

Es ist Aufgabe der Erfindung, eine Vorrichtung und ein Verfahren zur Abreicherung von aktiven Mikroorganismen in Fluiden zur Verfügung zu stellen, welche die genannten Nachteile vermeiden und eine längere Lebensdauer der Vorrichtung sowie eine erhöhte Prozesssicherheit gewährleisten.

Die Aufgabe wird erfindungsgemäß durch eine Vorrichtung der eingangs genannten Art gelöst, bei der der Strömungsbereich mindestens eine antimikrobielle Komponente zur Inaktivierung der Mikroorganismen und mindestens eine Adsorptionskomponente zur reversiblen und temporären Bindung der Mikroorganismen umfasst. Die erfindungsgemäße Vorrichtung zur Abreicherung von aktiven Mikroorganismen in Fluiden, beispielsweise flüssigen Medien oder Gasen bzw. Gasgemischen (z.B. Luft), umfasst also mindestens zwei unterschiedlich funktionalisierte Komponenten, d. h. die Kombination einer Mikroorganismen-adsorbierenden Komponente mit einer antimikrobiell wirksamen Komponente. Das zu entkeimende Medium (Fluid) strömt an beiden Komponenten vorbei. Durch die reversible und temporäre Anlagerung der in dem Medium enthaltenen aktiven Mikroorganismen an die Adsorptionskomponente wird deren Strömungsgeschwindigkeit derart herabgesetzt, dass diese durch die antimikrobielle Komponente inaktiviert werden. Danach können die inaktivierten Mikroorganismen im weiteren Strömungsverlauf aus der Vorrichtung ausgetragen werden, so dass beispielsweise die Nachteile eines ansteigenden Strömungswiderstandes oder eine Blockade vermieden werden. Durch die Inaktivierung der Mikroorganismen entfällt zudem das Risiko der Biofilmbildung, so dass im Unterschied zu herkömmlichen Vorrichtungen wie z.B. Filterelementen eine längere Betriebsdauer gewährleistet werden kann. Durch diese Effekte werden die Lebensdauer der erfindungsgemäßen Vorrichtung sowie die Prozesssicherheit deutlich erhöht.

In vorteilhafter Ausgestaltung der Erfindung ist vorgesehen, dass die antimikrobielle Komponente und die Adsorptionskomponente in räumlicher Nähe zueinander angeordnet sind und/oder zumindest teilweise, mittelbar oder unmittelbar, miteinander in Kontakt stehen. Beide Komponenten sollten also vorzugsweise zumindest benachbart zueinander angeordnet sein, wobei der mögliche Abstand zwischen den Komponenten an die Reichweite der antimikrobiellen Wirkung der jeweilig eingesetzten antimikrobiellen Komponente angepasst sein muss. Eine Komponente kann aber auch direkt auf die andere Komponente aufgebracht sein, so dass die beiden Komponenten sich zumindest teilweise berühren.

In weiterer vorteilhafter Ausgestaltung der Erfindung ist vorgesehen, dass die antimikrobielle Komponente und die Adsorptionskomponente schichtförmig angeordnet und/oder miteinander vermengt sind. Beispielsweise können die einzelnen Komponenten in (flachen) Schichten und abwechselnder Stapelreihenfolge kombiniert und/oder in partikulärer Form miteinander vermischt werden.

In weiterer vorteilhafter Ausgestaltung der Erfindung ist ferner vorgesehen, dass die antimikrobielle Komponente und/oder die Adsorptionskomponente auf mindestens ein Trägermaterial aufgebracht oder in dieses integriert ist/sind. Die beiden Komponenten können beispielsweise als Schichten bzw. Beschichtungen auf getrennten Trägermaterialien (Substraten) aufgebracht oder auf einem gemeinsamen Trägermaterial (Substrat) kombiniert werden. Die Komponenten sind vorzugsweise als Beschichtung auf die Oberfläche eines Trägermaterials aufgebracht, das vorzugsweise aus Metall, Glas, Kunststoff, Ton oder nachwachsenden Werkstoffen wie Chitosan, Cellulose und deren Modifikationen besteht. Das Trägermaterial sollte eine große Oberfläche aufweisen. Vorzugsweise sollte das Trägermaterial ein Gewebe, Vlies, Fasern oder Partikel (z.B. Kügelchen oder Pulverpartikel) umfassen. Die antimikrobielle Komponente kann beispielsweise auch als Granulat oder Pulver in das Trägermaterial integriert sein, so dass eine antimikrobiell wirksame Substanz vom Trägermaterial freigesetzt werden kann. Auf diesem modifizierten Trägermaterial ist vorzugsweise die Adsorptionskomponente, ggf. in Form von einzelnen Clustern, aufgebracht. Die antimikrobielle Komponente kann aber alternativ auch als Pulver in ein Trägermaterial integriert sein, das eine Mikroorganismen-adsorbierende Eigenschaft aufweist.

In weiterer vorteilhafter Ausgestaltung der Erfindung ist ferner vorgesehen, dass die Adsorptionskomponente mindestens einen Stoff umfasst, der mindestens eine positiv oder negativ geladene funktionelle Gruppe umfasst. Beispielsweise kann die Mikroorganismen-adsorbierende Komponente mindestens ein Polymer umfassen, das aufgrund der vorhandenen funktionelle Gruppen Ladungen (positive und/oder negative Ladungen) aufweist. Solche Polymere können in dünnen Schichten auf eine Oberfläche aufgebracht sein, so dass die Freisetzung der antimikrobiellen Substanzen über die Oberfläche nicht blockiert wird. Als funktionelle Gruppen eignen sich z.B. quartäre Ammonium-verbindungen, um positive Ladungen einzubringen, oder z.B. Sulfonsäuregruppen, um negative Ladungen einzuführen. Die geladenen Zellmembranen der Mikroorganismen adsorbieren dann aufgrund der Coulombkräfte an der Oberfläche des geladenen Polymers.

In weiterer vorteilhafter Ausgestaltung der Erfindung ist ferner vorgesehen, dass die antimikrobielle Komponente mindestens eine Substanz umfasst, die eine antimikrobielle Wirkung aufweist und/oder mindestens einen antimikrobiell wirkenden Stoff freisetzt oder *in situ* generiert. Bei der antimikrobiell wirksamen Substanz kann es sich beispielsweise um oligodynamische Metalle wie Silber oder Kupfer und deren Verbindungen, um anorganische Verbindungen wie Natriumhypochlorit oder Borsäure, um organische Verbindungen wie Triclosan oder Dichloroctylisothiazolinon (DCOIT), um metallorganische Verbindungen wie Zink-Pyrithion oder 10,10'-Oxybisphenoxoarsin (OBPA), um Antibiotika wie Amoxicillin oder Methicillin, oder um *in-situ* generierte reaktive Sauerstoffspezies ("*Reactive Oxygen Species"* = ROS) handeln. Insbesondere für langlebige Vorrichtungen (z.B. Filterelemente) werden als antimikrobiell wirksame Komponente vorzugsweise katalytisch aktive Oberflächen für die *in-situ* Generierung von ROS eingesetzt, da diese bei dauerhafter Anwendung keine Auslaugung der antimikrobiellen Substanz aufweisen. Solche Systeme für die *in-situ* Generierung von ROS sind weiter unten beispielhaft näher erläutert (antimikrobiell wirksame Oberfläche "AGXX^{®}").

In vorteilhafter Ausgestaltung der Erfindung ist auch vorgesehen, dass der Strömungsbereich röhren- und/oder säulenförmig ausgebildet ist und/oder mindestens ein kanal- und/oder schlauchförmiges Element umfasst. Beispielsweise kann die erfindungsgemäße Vorrichtung in Form einer Filtersäule ausgebildet sein. Da eine Filtersäule über einen vergleichsweise geringen Strömungswiderstand verfügt, sind die technischen Anforderungen an die verwendete Filtrationsanlage äußerst gering. Bei entsprechender Ausführung kann der Filter ohne Stromversorgung über den hydrostatischen Druck betrieben werden. Im weiteren Strömungsverlauf werden die inaktivierten Mikroorganismen aus der Vorrichtung ausgetragen. Da die Mikroorganismen nicht im Filterelement verbleiben, steigt dessen Strömungswiderstand auch nach längerer Verwendung nicht an. Durch die Inaktivierung der Mikroorganismen entfällt zudem das Risiko der Biofilmbildung, so dass im Unterschied zu herkömmlichen Filterelementen eine längere Betriebsdauer gewährleistet ist.

Die Aufgabe wird erfindungsgemäß ferner durch ein Filtermaterial zur Reduzierung der Anzahl aktiver Mikroorganismen in mindestens einem Fluid gelöst, welches mindestens eine antimikrobielle Komponente zur Inaktivierung der Mikroorganismen und mindestens eine Adsorptionskomponente zur reversiblen und temporären Bindung der Mikroorganismen umfasst. Das erfindungsgemäße Filtermaterial, das vorzugsweise zur Verwendung in der oben beschriebenen erfindungsgemäßen Vorrichtung und/oder einem Filterelement bzw. einer Filtersäule vorgesehen ist, ermöglicht in vorteilhafter Weise eine effektive Reinigung des Fluids (z.B. Wasser, Luft etc.) durch zuverlässige Inaktivierung der darin enthaltenen Mikroorganismen. Das Filtermaterial ist zu diesem Zweck innerhalb der Vorrichtung bzw. des jeweiligen Filterelements derart angeordnet, dass das zu entkeimende Fluid an dem Filtermaterial vorbeiströmt oder dieses durchströmt. Durch die reversible und temporäre Anlagerung der in dem Fluid enthaltenen aktiven Mikroorganismen an die Adsorptionskomponente wird deren Strömungsgeschwindigkeit derart herabgesetzt, dass diese durch die antimikrobielle Komponente inaktiviert werden. Bei dem Filtermaterial kann es sich beispielsweise um Fasern, Partikel, ein Gewebe, Vlies oder Ähnliches handeln.

In vorteilhafter Ausgestaltung der Erfindung ist vorgesehen, dass das Filtermaterial zusätzlich mindestens ein Trägermaterial umfasst. Das Trägermaterial kann beispielsweise aus Metall, Glas, Kunststoff, Ton oder nachwachsenden Werkstoffen wie Chitosan, Cellulose und deren Modifikationen bestehen.

In weiterer vorteilhafter Ausgestaltung der Erfindung ist vorgesehen, dass die antimikrobielle Komponente als Substrat dient, das zumindest teilweise mit der Adsorptionskomponente beschichtet ist.

In vorteilhafter Ausgestaltung der Erfindung ist auch vorgesehen, dass das Trägermaterial zumindest teilweise mit der antimikrobiellen Komponente und der Adsorptionskomponente beschichtet ist. Alternativ oder zusätzlich kann die antimikrobielle Komponente in vorteilhafter Weise auch zumindest teilweise in das Trägermaterial integriert sein, wobei das mit der antimikrobiellen Komponente dotierte Trägermaterial bei dieser Ausführungsform zumindest teilweise mit der Adsorptionskomponente beschichtet ist. Die antimikrobielle Komponente kann beispielsweise als Granulat oder Pulver in das Trägermaterial integriert sein, so dass ein antimikrobiell wirksamer Stoff vom Trägermaterial freigesetzt werden kann. Auf diesem modifizierten Trägermaterial ist die Adsorptionskomponente beispielsweise als dünne Schicht, ggf. in Form einzelner Cluster, aufgebracht, so dass der antimikrobiell wirksame Stoff an die Oberfläche bzw. in die Umgebung des Filtermaterials gelangen kann.

Die Aufgabe wird auch durch ein Verfahren der eingangs genannten Art gelöst, bei dem das Fluid an mindestens einer antimikrobiellen Komponente und mindestens einer Adsorptionskomponente vorbeiströmt, wobei die Strömungsgeschwindigkeit der Mikroorganismen im Strömungsbereich durch reversible und temporäre Bindung an die Adsorptionskomponente derart verringert wird, dass die Mikroorganismen durch die antimikrobielle Komponente inaktiviert werden. Durch die reversible und temporäre Anlagerung der in dem Fluid enthaltenen aktiven Mikroorganismen an die Adsorptionskomponente wird deren Strömungsgeschwindigkeit derart herabgesetzt, dass diese durch die antimikrobielle Komponente inaktiviert werden. Durch die Inaktivierung der Mikroorganismen entfällt das Risiko der Biofilmbildung, so dass im Unterschied zu herkömmlichen Verfahren eine längere Betriebsdauer gewährleistet und die Prozesssicherheit deutlich erhöht werden kann.

In vorteilhafter Ausgestaltung des erfindungsgemäßen Verfahrens ist vorgesehen, dass die inaktivierten Mikroorganismen aus dem Strömungsbereich ausgetragen werden, so dass beispielsweise die Nachteile eines ansteigenden Strömungswiderstandes oder eine Blockade vermieden werden können.

In weiterer vorteilhafter Ausgestaltung des erfindungsgemäßen Verfahrens ist vorgesehen, dass die antimikrobielle Komponente mindestens einen antimikrobiell wirkenden Stoff freisetzt und in den Strömungsbereich abgibt und/oder mindestens einen antimikrobiell wirkenden Stoff *in situ* im Strömungsbereich generiert. Bei dem antimikrobiell wirkenden Stoff kann es sich beispielsweise um oligodynamische Metalle wie Silber oder Kupfer und deren Verbindungen, um anorganische Verbindungen wie Natriumhypochlorit oder Borsäure, um organische Verbindungen wie Triclosan oder Dichloroctylisothiazolinon (DCOIT), um metallorganische Verbindungen wie Zink-Pyrithion oder 10,10'-Oxybisphenoxoarsin (OBPA), um Antibiotika wie Amoxicillin oder Methicillin handeln. Alternativ oder zusätzlich könnte die antimikrobielle Komponente auch derart ausgewählt sein, dass sie *in-situ* reaktive Sauerstoffspezies ("*Reactive Oxygen Species"* = ROS) generiert. Beispielsweise können als antimikrobiell wirksame Komponente katalytisch aktive Oberflächen für die *in-situ* Generierung von ROS eingesetzt werden, da diese bei dauerhafter Anwendung keine Auslaugung der antimikrobiellen Substanz aufweisen. Solche Systeme für die *in-situ* Generierung von ROS sind weiter unten beispielhaft näher erläutert (antimikrobiell wirksame Oberfläche "AGXX^{®}").

"Fluid" im Sinne der Erfindung bezeichnet jegliche fließfähige Materie bzw. alle fließfähigen Substanzen, Stoffe und Stoffgemische. Insbesondere umfasst der Begriff "Fluid" u.a. Flüssigkeiten, Suspensionen, Gase, Plasma und/oder Aerosole.

"Mikroorganismen" im Sinne der Erfindung bezeichnet mikroskopisch kleine Organismen oder Partikel, die aus einzelnen oder wenigen Zellen, Zellaggregaten oder organischen Strukturen bestehen. Insbesondere umfasst der Begriff "Mikroorganismen" u.a. Bakterien, Pilze (einschl. Hefen), Algen, Protozoen und Viren.

"Aktiv" sind Mikroorganismen im Sinne der Erfindung, wenn sie leben, lebensfähig, stoffwechselaktiv, infektiös und/oder pathogen sind. "lnaktiv" oder "inaktiviert" sind Mikroorganismen im Sinne der Erfindung, wenn sie tot oder nicht mehr lebensfähig sind, keinen Stoffwechsel mehr durchführen oder induzieren können, nicht mehr infektiös und/oder nicht mehr pathogen sind.

Die Erfindung wird im Weiteren anhand der nachfolgend beschriebenen Figuren und Ausführungsformen beispielhaft näher erläutert.
**Figur 1** zeigt eine schematische Darstellung eines Längsschnitts durch eine beispielhafte Ausführungsform einer erfindungsgemäßen Vorrichtung zur Durchführung einer Ausführungsform des erfindungsgemäßen Verfahrens.
**Figur 2** zeigt schematische Darstellungen von Seitenansichten zweier beispielhafter Ausführungsformen der erfindungsgemäßen Vorrichtung:
   a) Filtereinheit mit stapelweiser Anordnung einzelner Filtervliese der beiden Komponenten, und
   b) Filtereinheit, bei der beide Komponenten in Form von Partikeln miteinander vermengt sind.
**Figur 3** zeigt in drei schematischen Darstellungen den Ablauf einer beispielhaften Ausführungsform des erfindungsgemäßen Verfahrens.
**Figur 4** zeigt eine schematische Darstellung einer weiteren beispielhaften Ausführungsform einer erfindungsgemäßen Vorrichtung zur Durchführung einer Ausführungsform des erfindungsgemäßen Verfahrens.
**Figur 5** zeigt ein Balkendiagramm der Filtereffizienz von Cellulosefasern, die zuerst mit der antimikrobiell wirksamen Oberfläche "AGXX^{®}" (Ag/Ru, siehe unten) und dann mit dem Bakterien-adsorbierenden Polymer Poly(N-trimethylammonium)ethylmethacrylat (PTEMA) beschichtet wurden.
**Figur 6** zeigt ein Balkendiagramm der Filtereffizienz von Cellulose-Vlies, das zuerst mit der antimikrobiell wirksamen Oberfläche "AGXX^{®}" (Ag/Ru, siehe unten) und dann mit dem Bakterien-adsorbierenden Polymer PTEMA beschichtet wurde.
**Figur 7** zeigt ein Balkendiagramm eines Vergleichs von unterschiedlichen Filtermaterialien zur Durchführung des erfindungsgemäßen Verfahrens.
**Figur 8** zeigt ein in einem Diagramm die Keimreduktion von E. coli - Bakterien in Abhängigkeit von der Keimbeladung für 100 mg Filtermaterial. Die Keimreduktion ist sowohl für Faserpartikel dargestellt, die zunächst mit der antimikrobiell wirksamen Oberfläche "AGXX^{®}" (Ag/Ru, siehe unten) und dann mit dem Bakterien-adsorbierenden Polymer PTEMA beschichtet wurden, sowie für Fasern, die nur mit dem Polymer PTEMA beschichtet wurden.

### Beschreibung vorteilhafter und beispielhafter Ausführungsformen der Erfindung

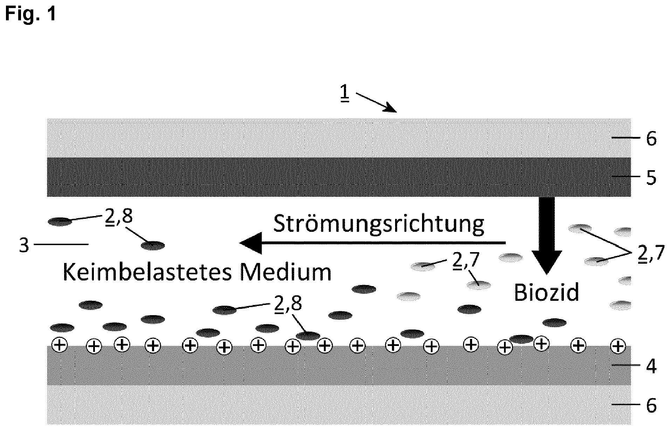

**Figur 1** zeigt eine mögliche Ausführungsform einer erfindungsgemäßen Vorrichtung 1 zur Abreicherung von aktiven Mikroorganismen 2 in Fluiden (z.B. flüssigen Medien), die einen Strömungsbereich 3 und mindestens zwei unterschiedlich funktionalisierte Komponenten umfasst. Hierbei handelt es sich um die Kombination einer Mikroorganismen-adsorbierenden Komponente (= Adsorptionskomponente 4) mit einer antimikrobiell wirksamen Komponente (= antimikrobielle Komponente 5), die jeweils als Schicht auf ein Substrat (= Trägermaterial 6) aufgebracht sind. Die erfindungsgemäße Vorrichtung 1 umfasst somit mindestens eine Mikroorganismen-adsorbierende Schicht (Komponente 4), die auf ein Substrat aufgebracht ist, und mindestens eine antimikrobiell aktive Schicht (Komponente 5), die auf das selbe oder ein anderes Substrat aufgebracht ist. Das Substrat bzw. die Substrate für beide Komponenten 4, 5 kann bzw. können das gleiche Material (z.B. Vlies, Glaskugeln, Kunststoffpartikel, etc.) oder unterschiedliche Materialien umfassen. Die beiden Komponenten 4, 5 können auf getrennten Substraten aufgebracht sein oder auf einem gemeinsamen Trägermaterial 6 kombiniert werden. Im hier dargestellten Ausführungsbeispiel handelt es sich um eine röhrenförmige Vorrichtung 1, dessen Wandung das Trägermaterial 6 bildet und beispielsweise aus Kunststoff oder Metall bestehen kann. Die innere Oberfläche des Trägermaterials 6 ist mit den Komponenten 4, 5 beschichtet, wobei eine Hälfte des Trägermaterials 6 mit einer Schicht der Adsorptionskomponente 4 und die andere Hälfte des Trägermaterials 6 mit einer Schicht der antimikrobiellen Komponente 5 beschichtet ist. Das zu entkeimende Fluid mit den Mikroorganismen 2 strömt innerhalb des Strömungsbereichs 3 an den beiden Komponenten 4, 5 vorbei. Durch die reversible und temporäre Anlagerung der in dem Fluid enthaltenen aktiven Mikroorganismen 2 (hier lebende Bakterien 7) an die Adsorptionskomponente 4 wird deren Strömungsgeschwindigkeit derart herabgesetzt, dass diese durch die antimikrobielle Komponente 5 inaktiviert werden. Durch die Inaktivierung der Mikroorganismen 2 kann das Fluid effektiv entkeimt und gleichzeitig die Bildung eines Biofilms im Strömungsbereich 3 verhindert werden. Im weiteren Strömungsverlauf werden die inaktivierten Mikroorganismen 2 (hier abgetötete Bakterien 8) dann aus dem Strömungsbereich 3 der Vorrichtung 1 ausgetragen, so dass es nicht zu einem Ansteigen des Strömungswiderstandes oder einer Blockade durch Zellreste kommen kann.

Die antimikrobielle Komponente 5 kann beispielsweise mindestens eine Substanz umfassen, die eine antimikrobielle Wirkung aufweist und/oder einen antimikrobiell wirkenden Stoff freisetzen bzw. in den Strömungsbereich 3 abgeben kann (siehe Pfeil 9, "Biozid" = antimikrobiell wirkende(r) Substanz/Stoff). Bei dieser Substanz kann es sich beispielsweise um oligodynamische Metalle wie Silber oder Kupfer und deren Verbindungen, anorganische Verbindungen wie Natriumhypochlorit oder Borsäure, organische Verbindungen wie Triclosan oder Dichloroctylisothiazolinon (DCOIT), metallorganische Verbindungen wie Zink-Pyrithion oder 10,10'-Oxybisphenoxoarsin (OBPA), und/oder Antibiotika wie Amoxicillin oder Methicillin handeln. Zusätzlich oder alternativ kann die antimikrobielle Komponente 5 auch derart zusammengesetzt und ausgebildet sein, dass sie im Strömungsbereich 3 reaktive Sauerstoffspezies (*"Reactive Oxygen Species"* = ROS) *in-situ* generiert (z.B. siehe unten "AGXX^{®}").

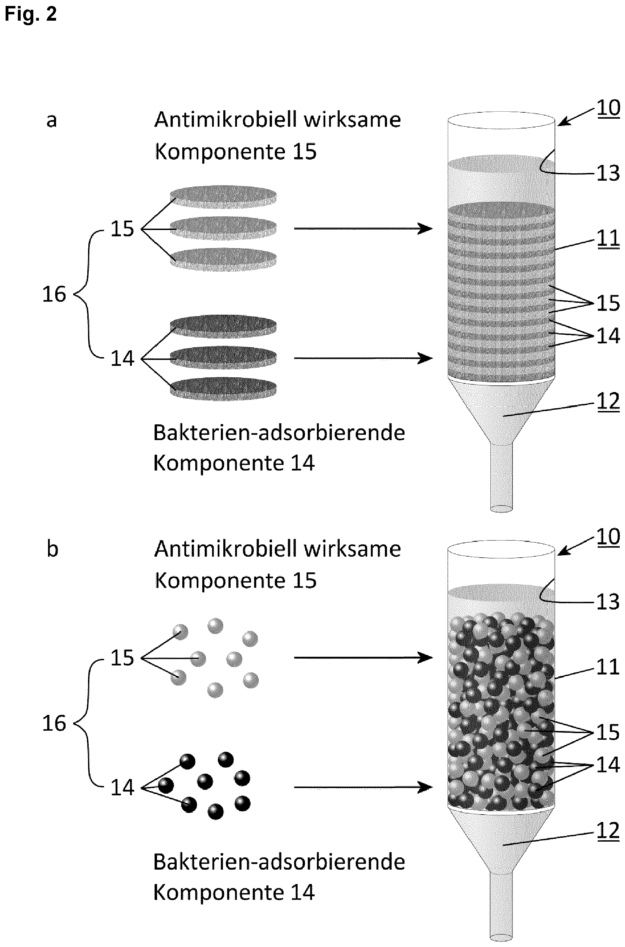

**Figur 2** zeigt eine weitere beispielhafte Ausführungsform einer erfindungsgemäßen Vorrichtung 10 zur Reduzierung der Anzahl aktiver Mikroorganismen in Fluiden (z.B. flüssigen Medien). Die Vorrichtung 10 umfasst einen zylinderförmigen Bereich 11 und einen daran anschließenden trichterförmigen Bereich 12. Innerhalb des zylinderförmigen Bereichs 11 befindet sich ein Strömungsbereich 13, durch den das zu entkeimende Fluid (hier eine Flüssigkeit) strömt. Im Strömungsbereich 13 sind ferner Adsorptionskomponenten 14 und antimikrobielle Komponenten 15 angeordnet, an denen das zu entkeimende Fluid vorbeiströmt, wobei die Strömungsgeschwindigkeit der in dem Fluid enthaltenen aktiven Mikroorganismen durch reversible und temporäre Anlagerung an die Adsorptionskomponenten 14 verringert wird, so dass diese durch die antimikrobiellen Komponenten 15 inaktiviert werden können. Zu diesem Zweck ist in den in Figur 2 dargestellten Ausführungsformen der Erfindung ein Filtermaterial 16 vorgesehen, das die beiden Komponenten 14, 15 umfasst und entweder in Form von im Wechsel stapelweise angeordneten Filtervliesen (**Figur 2a**) oder miteinander vermengten Fasern oder Partikeln (hier Kügelchen, **Figur 2b**) im Strömungsbereich 13 angeordnet ist. Bei der Ausführungsform gemäß Figur 2a handelt es sich um Vlieselemente, die jeweils mit einer von beiden Komponenten 14, 15 beschichtet sind und in wechselnder Komponentenfolge stapelweise kombiniert wurden. Bei der Ausführungsform gemäß Figur 2b handelt es sich um Partikel, die jeweils mit einer von beiden Komponenten 14, 15 beschichtet sind und dann in gewissen Mengenanteilen miteinander vermischt wurden. Die erfindungsgemäße Vorrichtung 10 ist also als eine Art Filtersäule ausgebildet, wobei das zu reinigende Fluid beim Durchfließen des Strömungsbereichs 13 und damit des Filtermaterials 16 durch Inaktivieren der darin enthaltenen Mikroorganismen entkeimt wird. Im weiteren Strömungsverlauf werden die inaktivierten Mikroorganismen dann über den trichterförmigen Bereich 12 aus der Vorrichtung 10 ausgetragen. Da eine solche Filtersäule einen vergleichsweise geringen Strömungswiderstand aufweist, sind die technischen Anforderungen an die verwendete Vorrichtung 10 äußerst gering. Bei entsprechender Ausführung kann die Filtersäule ohne Stromversorgung über den hydrostatischen Druck betrieben werden. Da die Mikroorganismen nicht im Filtermaterial 16 verbleiben, steigt der Strömungswiderstand im Strömungsbereich 13 auch nach längerer Verwendung nicht an. Durch die Inaktivierung der Mikroorganismen kann gleichzeitig eine Biofilmbildung verhindert werden, so dass im Unterschied zu herkömmlichen Filterelementen eine längere Betriebsdauer gewährleistet ist.

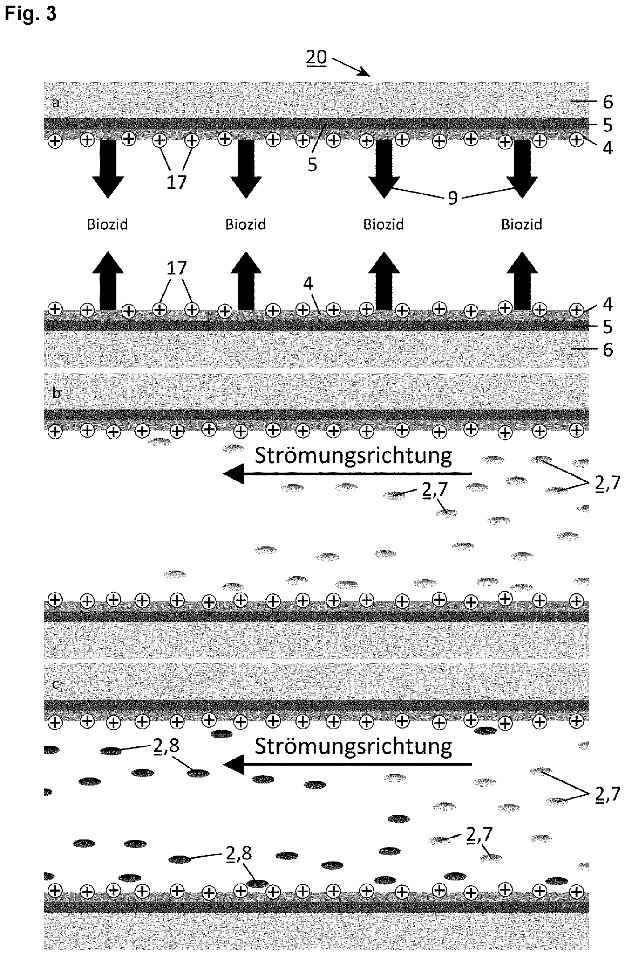

**Figur 3** zeigt eine Ausführungsform einer erfindungsgemäßen Vorrichtung 20, die im Wesentlichen der Vorrichtung 1 gemäß Figur 1 entspricht. Aus Gründen der Übersichtlichkeit sind die Bestandteile der in Figur 3 schematisch dargestellten Vorrichtung 20 daher mit den gleichen Bezugsziffern versehen wie die entsprechenden Bestandteile der Vorrichtung 1 gemäß Figur 1. Im Unterschied zur Vorrichtung 1 gemäß Figur 1 sind die Komponenten 4, 5 der in Figur 3 dargestellten Vorrichtung 20 nicht nebeneinander auf das Trägermaterial 6 aufgebracht, sondern übereinander. Dabei wurde zunächst die antimikrobiell wirksame Komponente 5 auf das Trägermaterial 6 aufgebracht und dann mit der Mikroorganismen-adsorbierenden Komponente 4 beschichtet. Die Adsorptionskomponente 4 weist auf ihrer Oberfläche positiv geladene funktionelle Gruppen 17 auf, die der reversiblen Bindung von Mikroorganismen dienen. Die antimikrobielle Komponente 5 umfasst eine Substanz, die einen antimikrobiell wirkenden Stoff freisetzt und in den Strömungsbereich 3 abgibt (siehe Pfeil 9, "Biozid" = antimikrobiell wirkender Stoff) **(****Figur 3a****).** Das Biozid passiert dabei die Beschichtung (= Adsorptionskomponente 4) der antimikrobiellen Komponente 5 und gelangt in das zu filtrierende Fluid im Strömungsraum 3. Die in den Strömungsraum 3 eintretenden Mikroorganismen werden mittels der geladenen funktionellen Gruppen 17 an der Oberfläche der Adsorptionskomponente 4 festgehalten **(****Figur 3b****).** Dort werden sie dann durch den freigesetzten, antimikrobiellen Stoff ("Biozid") inaktiviert bzw. abgetötet. Da die Mikroorganismen keine kovalenten Bindungen zur Oberfläche der Adsorptionskomponente 4 ausbilden, werden sie anschließend von dem durchströmenden Fluid aus dem Strömungsraum 3 ausgetragen **(****Figur 3c****).**

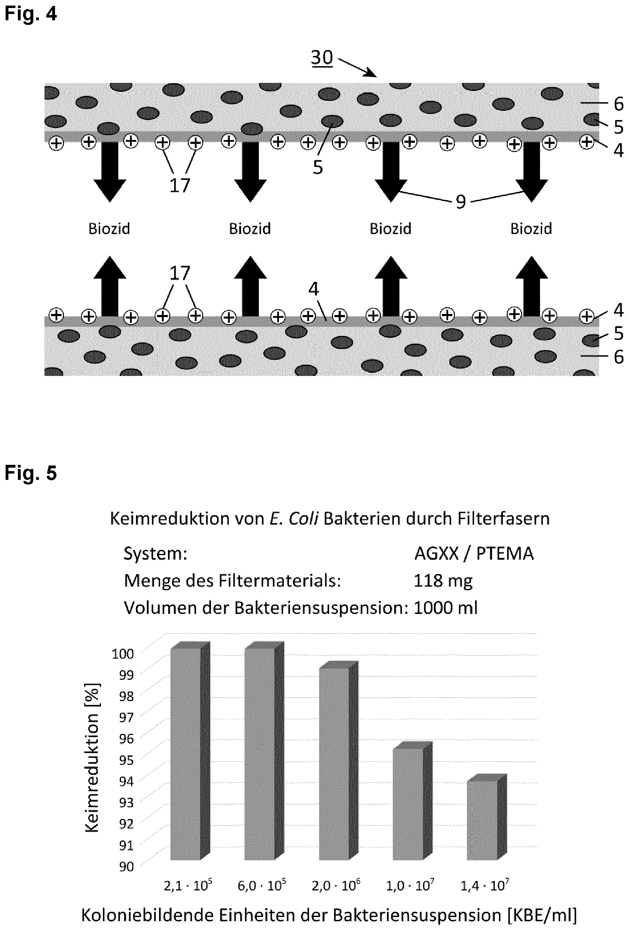

**Figur 4** zeigt ebenfalls eine Ausführungsform einer erfindungsgemäßen Vorrichtung 30, die im Wesentlichen der Vorrichtung 1 gemäß Figur 1 entspricht. Aus Gründen der Übersichtlichkeit sind die Bestandteile der in Figur 4 schematisch dargestellten Vorrichtung 30 daher mit den gleichen Bezugsziffern versehen wie die entsprechenden Bestandteile der Vorrichtung 1 gemäß Figur 1 und der Vorrichtung 20 gemäß Figur 3. Im Unterschied zur Vorrichtung 1 gemäß Figur 1 und zur Vorrichtung 20 gemäß Figur 3 ist bei der in Figur 4 dargestellten Vorrichtung 30 die antimikrobielle Komponente 5 in Form einer Vielzahl einzelner Partikel in das Trägermaterial 6 integriert. Die antimikrobielle Komponente 5 umfasst eine Substanz, die einen antimikrobiell wirkenden Stoff freisetzt und in den Strömungsbereich 3 abgibt (siehe Pfeil 9, "Biozid" = antimikrobiell wirkender Stoff). Die antimikrobielle Komponente 5 kann beispielsweise ein Feststoff sein, der sich allmählich in einem flüssigen, durchströmenden Medium auflöst, oder in-situ ROS erzeugt. Zu diesem Zweck muss das Trägermaterial 6 (z.B. Zellulose oder ein Kunststoff) eine gewisse Wasseraufnahme ermöglichen.

**Figur 5** veranschaulicht die Filtereffizienz von Cellulosefasern, die zuerst mit der antimikrobiell wirksamen Oberfläche "AGXX^{®}" (siehe unten) und dann mit dem Bakterien-adsorbierenden Polymer Poly(N-trimethylammonium)ethylmethacrylat (PTEMA) beschichtet wurden. Es wurden jeweils 1000 ml einer Bakteriensuspension von *E*. *coli* mit steigender Anzahl an koloniebildenden Einheiten filtriert. Als Filtermedium wurden 118 mg Cellulose-Fasern eingesetzt, die zuerst mit der antimikrobiellen Oberfläche "AGXX^{®}" und dann mit dem Bakterien-adsorbierenden Polymer PTEMA beschichtet worden waren. Die Filtereffizienz wurde jeweils durch Ausplattieren des Filtrats bestimmt. Bis zu einer Keimbelastung von 6,0 x 10⁵ KBE/ml beträgt die Filtereffizienz 99,9 %. Steigt die Keimbelastung weiter an, setzt eine Überladung des Filters ein und die Filtereffizienz nimmt ungefähr linear ab. Für eine Keimbelastung von 1,4 x 10⁷ KBE/ml beträgt die Filtereffizienz 93,7 %.

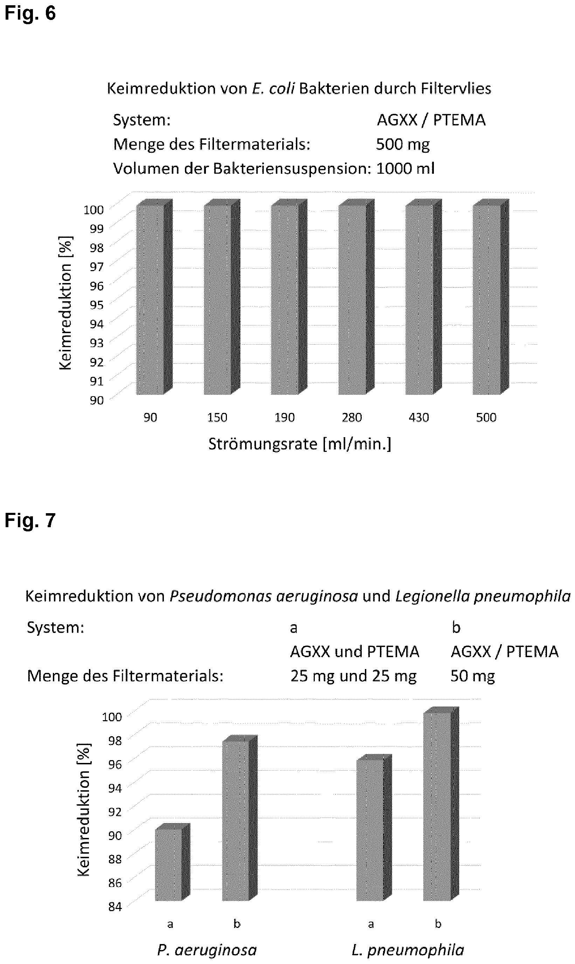

**Figur 6** zeigt die Filtereffizienz von Cellulose-Vlies, das zuerst mit der antimikrobiell wirksamen Oberfläche "AGXX^{®}" (siehe unten) und dann mit dem Bakterien-adsorbierenden Polymer PTEMA beschichtet wurde. Es wurden jeweils 1000 ml einer Bakteriensuspension von *E. coli* mit einer Keimzahl von 1,5 x 10⁶ KBE/ml filtriert. Hierbei wurde die Strömungsrate zwischen Werten vom 90 - 500 ml/min. variiert. Als Filtermedium wurden neun in einem Stapel angeordnete Cellulose-Vliese verwendet (500 mg), die zuerst mit der antimikrobiellen Oberfläche "AGXX^{®}" und anschließend mit dem Bakterien-adsorbierenden Polymer PTEMA beschichtet worden waren. Die Filtereffizienz wurde jeweils durch Ausplattieren des Filtrats bestimmt. Die Filtereffizienz betrug für alle Strömungsraten 99,9 %. Unter den gewählten Versuchsbedingungen konnte keine Abnahme der Filtereffizienz beobachtet werden.

In **Figur 7** ist der Vergleich von unterschiedlichen Filtermaterialien dargestellt. Es handelt sich hierbei jeweils um Mischungen der beiden Komponenten 14, 15 gemäß Figur 2b. Die beiden Komponenten 14, 15 wurden einerseits jeweils auf Cellulose-Pulver präpariert, wobei von beiden Materialien jeweils 25 mg miteinander vermischt wurden (System a). Ein weiteres Filtersystem besteht aus Cellulose-Pulver, das zuerst mit der antimikrobiell wirksamen Oberfläche "AGXX^{®}" (siehe unten) und anschließend mit dem Bakterien-adsorbierenden Polymer PTEMA beschichtet wurde (System b). Von diesem Pulver wurden 50 mg eingesetzt. Für beide Systeme wurde die Filtereffizienz an *Pseudomonas aeruginosa* und *Legionella pneumophila* ermittelt. System a weist eine Keimreduktion für *P. aeruginosa* von 90,0 % und für *L. pneumophila* von 95,8 % auf. Für System b betragen die Keimreduktionen für *P. aeruginosa* 97,4 % und für *L. pneumophila* 99,3 %. Die Kombination der beiden Komponenten (Adsorptionskomponente und antimikrobielle Komponente) auf einem Trägermaterial erweist sich somit als deutlich effizienter als die Mischung der beiden Einzelkomponenten.

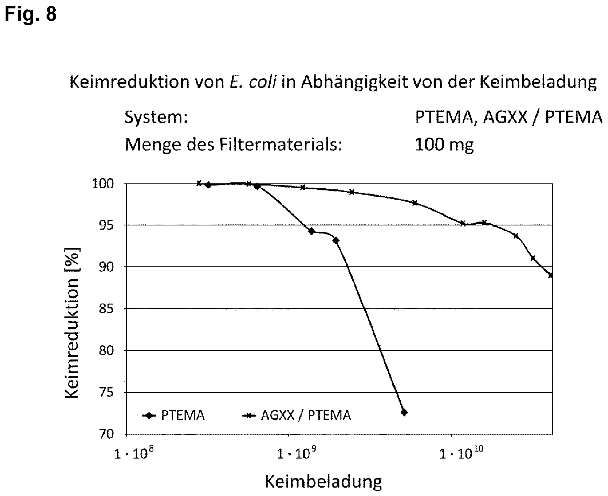

**Figur 8** zeigt die Keimreduktion von *E. coli* - Bakterien mit steigender Keimbeladung für 100 mg Fasern. Die Keimreduktion ist sowohl für Faserpartikel dargestellt, die zunächst mit der antimikrobiell wirksamen Oberfläche "AGXX^{®}" (siehe unten) und dann mit dem Bakterien-adsorbierenden Polymer PTEMA beschichtet wurden, als auch für Fasern, die nur mit dem Polymer ausgestattet sind. Die Keimbeladung beträgt 3 x 10⁸ bis 4 x 10¹⁰ Bakterien. Für die Faserpartikel, die zusätzlich mit einer antimikrobiellen "AGXX^{®}"-Beschichtung ausgestattet sind, ist eine deutliche Zunahme der Keimreduktion zu erkennen, die mit steigender Keimbeladung zunimmt. Bis zu einer Keimbeladung von 6 x 10⁸ liegt die Keimreduktion für beide Filtersysteme deutlich über 99 %. Danach fällt die Keimreduktion für das System ohne antimikrobielle Beschichtung deutlich ab, während das System mit antimikrobieller Beschichtung weiterhin hohe Werte der Keimreduktion aufweist. Die Retentionszeit der Bakterien im Filterelement wird somit ausreichend erhöht, so dass eine gesteigerte Keimreduktion durch die antimikrobielle Komponente zu verzeichnen ist.

*In-situ* generierte reaktive Sauerstoffspezies ("Reactive Oxygen Species" = ROS) können von der antimikrobiellen Komponente als katalytisch aktive Oberfläche zur effektiven Inaktivierung von Mikroorganismen im Strömungsbereich bzw. am Filtermaterial erzeugt werden. Vorzugsweise umfasst die antimikrobielle Komponente zu diesem Zweck eine bioaktive Zusammensetzung (antimikrobiell wirksame Oberfläche "AGXX^{®}"), die mindestens zwei Elemente (z.B. metallisches Silber und metallisches Ruthenium) umfasst, wobei diese Elemente zumindest mit ihren jeweiligen Oberflächen derart miteinander in elektrisch leitendem Kontakt stehen, dass in Gegenwart von Wasser und Sauerstoff der im Wasser gelöste Sauerstoff bei Kontakt mit der katalytisch aktiven Oberfläche reduziert wird und aktive Sauerstoffspezies (ROS) entstehen, die dann an die Umgebung (z. B. in den Strömungsbereich) abgegeben werden. Die antimikrobiell wirksame Oberfläche "AGXX^{®}" umfasst somit in vorteilhafter Weise ein bioaktives Materialsystem, an dessen Elektroden des gebildeten mikrogalvanischen Elements Redox-Reaktionen ablaufen, die zu einer Abtötung der Mikroorganismen führen. An der Kathode (Ruthenium) wird dabei molekularer Sauerstoff zu Sauerstoffradikalen reduziert, die dann toxisch auf die Mikroorganismen wirken. Eine "AGXX^{®}"-Oberfläche bzw. -Beschichtung kann beispielsweise durch das Aufbringen von Silber- und Ruthenium-Schichten auf geeignete Trägermaterialien mittels chemisch-reduktiver Prozesse oder herkömmlicher Galvanotechnik hergestellt werden, wobei zunächst eine Silberschicht auf das Trägermaterial aufgebracht wird, die dann mit einer mikroporösen (clusterförmigen) Rutheniumschicht beschichtet wird. Insbesondere bei der Beschichtung sehr kleiner Partikel und/oder nicht-leitender Stoffe (z.B. Glas, Cellulose, Kunststoff) erfolgt diese vorzugsweise durch Verfahren der außenstromlosen Metallabscheidung, bei denen entweder das zu beschichtende Trägermaterial als Reduktionsmittel dient (Austauschverfahren) oder einem Elektrolyt ein Reduktionsmittel zugesetzt wird (Reduktionsverfahren). Galvanische Beschichtungsverfahren eignen sich dagegen ausschließlich für die Beschichtung elektrisch leitender Materialien, wobei der zu beschichtende Werkstoff leitend mit einer Elektrode verbunden wird.

Die vorliegende Erfindung betrifft also eine bioaktive Vorrichtung und ein bioaktives Filtermaterial, die jeweils eine antimikrobiell wirksame Oberfläche in Kombination mit einer Mikroorganismen-adsorbierenden Oberfläche umfassen. Zwischen beiden Oberflächen besteht eine enge räumliche Nähe. Idealerweise wird eine Mikroorganismen-adsorbierende Beschichtung direkt auf einer antimikrobiell wirksamen Oberfläche aufgebracht. Die antimikrobiell wirksame Oberfläche setzt eine Substanz bzw. einen Stoff frei, die/der zur Inaktivierung (Abtötung) der mikrobiellen Kontamination führt. Da dieser Prozess eine gewisse Wirkdauer voraussetzt, wird die Verweildauer der Mikroorganismen durch das Mikroorganismen-adsorbierende Material erhöht. Die Anbindung der Mikroorganismen an die Mikroorganismen-adsorbierende Beschichtung erfolgt dabei nur temporär. Die abgetöteten Mikroorganismen werden im Gegensatz zu herkömmlichen Filterverfahren zum großen Teil aus der Vorrichtung bzw. dem Filtersystem ausgetragen.

Herkömmliche Verfahren zur Entkeimung von Flüssigkeiten basieren häufig auf dem Einsatz von Tiefenfiltern oder Membranfiltern, wobei die Mikroorganismen in dem Filter verbleiben. Die Vorteile dieser Technologie im Vergleich zur Strahlen- oder Wärmesterilisation liegen in dem geringen technischen Aufwand und niedrigen Energiekosten. Als nachteilig hat sich aber erwiesen, dass mit zunehmender Betriebsdauer die im Filter verbleibenden Rückstände zu einem Anstieg des Strömungswiderstandes führen. Bei herkömmlichen Fitrationsverfahren verbleiben zurückgehaltene Mikroorganismen im Filterelement. Dort können sie sich häufig ungehindert vermehren, wodurch der Strömungswiderstand zusätzlich ansteigt. Viele Mikroorganismen sind in der Lage einen Biofilm auszubilden, der eine hohe Anzahl an planktonischen Zellen freisetzt. Der Biofilm kann die Filtermembran durchdringen, so dass in der Folge das Filterelement seine Funktion verliert und sogar zu einer Belastung mit Mikroorganismen beiträgt. Die vorliegende Erfindung stellt ein Filtrationsverfahren zur Verfügung, bei dem Mikroorganismen hingegen nur temporär an die Oberfläche des Filtermaterials gebunden werden. Nachdem die Mikroorganismen beispielsweise durch einen freigesetzten antimikrobiellen Stoff abgetötet wurden, werden diese wieder aus dem Filterelement ausgetragen. Durch diese neuartige Filtrationsmethode werden die aus dem Stand der Technik bekannten Nachteile des ansteigenden Strömungswiderstandes, der Filterblockade sowie der Biofilmbildung vermieden. Dadurch werden die Lebensdauer des Filterelements sowie die Prozesssicherheit deutlich erhöht.

Die Effizienz der erfindungsgemäßen Vorrichtung bzw. des erfindungsgemäßen Filtermaterials hängt von der Menge der eingesetzten Komponenten, der Geometrie des Filtermaterials, der Geometrie des Filterelements, von der Keimbelastung des zu filtrierenden Fluids, von den physikalischen Eigenschaften des zu filtrierenden Fluids sowie von dessen Strömungsgeschwindigkeit ab. Aufgrund der universellen Eigenschaften des Filtermaterials kann die Filtereffizienz durch einen geeigneten Aufbau des Filterelements an die jeweilige Filtrationsanwendung angepasst werden. Die vorliegende Erfindung erlaubt die Entwicklung hocheffizienter Filtersysteme zur Entkeimung von Fluiden (z.B. Flüssigkeiten) mit hoher Lebensdauer. Bei einer Überladung des Filtermaterials mit Mikroorganismen kann dieses durch Spülen mit einer konzentrierten Salzlösung regeneriert werden.

## Patentansprüche

1. Vorrichtung (1, 10, 20, 30) zur Reduzierung der Anzahl aktiver Mikroorganismen (2) in Fluiden, welche mindestens einen Strömungsbereich (3, 13) umfasst, der von dem Fluid durchströmbar ist, wobei der Strömungsbereich (3, 13) mindestens eine antimikrobielle Komponente (5, 15) zur Inaktivierung der Mikroorganismen (2) und mindestens eine Adsorptionskomponente (4, 14) zur reversiblen und temporären Bindung der Mikroorganismen (2) umfasst.

2. Vorrichtung nach Anspruch 1, **dadurch gekennzeichnet, dass** die antimikrobielle Komponente (5, 15) und die Adsorptionskomponente (4, 14) in räumlicher Nähe zueinander angeordnet sind und/oder zumindest teilweise, mittelbar oder unmittelbar, miteinander in Kontakt stehen.

3. Vorrichtung nach Anspruch 1 oder 2, **dadurch gekennzeichnet, dass** die antimikrobielle Komponente (5, 15) und die Adsorptionskomponente (4, 14) schichtförmig angeordnet und/oder miteinander vermengt sind.

4. Vorrichtung nach einem der Ansprüche 1 bis 3, **dadurch gekennzeichnet, dass** die antimikrobielle Komponente (5, 15) und/oder die Adsorptionskomponente (4, 14) auf mindestens ein Trägermaterial (6) aufgebracht oder in dieses integriert ist/sind.

5. Vorrichtung nach einem der Ansprüche 1 bis 4, **dadurch gekennzeichnet, dass** die Adsorptionskomponente (4, 14) mindestens einen Stoff umfasst, der mindestens eine positiv oder negativ geladene funktionelle Gruppe umfasst.

6. Vorrichtung nach einem der Ansprüche 1 bis 5, **dadurch gekennzeichnet, dass** die antimikrobielle Komponente (5, 15) mindestens eine Substanz umfasst, die eine antimikrobielle Wirkung aufweist und/oder mindestens einen antimikrobiell wirkenden Stoff freisetzt oder *in situ* generiert.

7. Vorrichtung nach einem der Ansprüche 1 bis 6, **dadurch gekennzeichnet, dass** der Strömungsbereich (3, 13) röhren- und/oder säulenförmig ausgebildet ist und/oder mindestens ein kanal- und/oder schlauchförmiges Element umfasst.

8. Filtermaterial (16) zur Reduzierung der Anzahl aktiver Mikroorganismen (2) in mindestens einem Fluid, welches mindestens eine antimikrobielle Komponente (5, 15) zur Inaktivierung der Mikroorganismen (2) und mindestens eine Adsorptionskomponente (4, 14) zur reversiblen und temporären Bindung der Mikroorganismen (2) umfasst.

9. Filtermaterial nach Anspruch 8, **dadurch gekennzeichnet, dass** dieses zusätzlich mindestens ein Trägermaterial umfasst.

10. Filtermaterial nach Anspruch 8 oder 9, **dadurch gekennzeichnet, dass** die antimikrobielle Komponente als Substrat dient, das zumindest teilweise mit der Adsorptionskomponente (4, 14) beschichtet ist.

11. Filtermaterial nach Anspruch 9 oder 10, **dadurch gekennzeichnet, dass** das Trägermaterial zumindest teilweise mit der antimikrobiellen Komponente (5, 15) und der Adsorptionskomponente (4, 14) beschichtet ist.

12. Filtermaterial nach einem der Ansprüche 9 bis 11, **dadurch gekennzeichnet, dass** die antimikrobielle Komponente (5, 15) zumindest teilweise in das Trägermaterial integriert ist und dass das Trägermaterial zumindest teilweise mit der Adsorptionskomponente (4, 14) beschichtet ist.

13. Verfahren zur Reduzierung der Anzahl aktiver Mikroorganismen (2) in mindestens einem Fluid, wobei das Fluid mindestens einen Strömungsbereich (3, 13) durchströmt und dabei an mindestens einer antimikrobiellen Komponente (5, 15) und mindestens einer Adsorptionskomponente (4, 14) vorbeiströmt, wobei die Strömungsgeschwindigkeit der Mikroorganismen (2) im Strömungsbereich (3, 13) durch reversible und temporäre Bindung an die Adsorptionskomponente (4, 14) derart verringert wird, dass die Mikroorganismen (2) durch die antimikrobielle Komponente (5, 15) inaktiviert werden.

14. Verfahren nach Anspruch 13, **dadurch gekennzeichnet, dass** die inaktivierten Mikroorganismen (2) aus dem Strömungsbereich (3, 13) ausgetragen werden.

15. Verfahren nach Anspruch 13 oder 14, **dadurch gekennzeichnet, dass** die antimikrobielle Komponente (5, 15) mindestens einen antimikrobiell wirkenden Stoff freisetzt und in den Strömungsbereich (3, 13) abgibt und/oder mindestens einen antimikrobiell wirkenden Stoff *in situ* im Strömungsbereich (3, 13) generiert.
